# EUROPÄISCHE PATENTANMELDUNG

(11) **EP 4 485 779 A1**
(43) Veröffentlichungstag der Anmeldung: **01.01.2025**
(21) Anmeldenummer: 23181663.8
(22) Anmeldetag: 27.06.2023
(51) Int. Cl.: H02M 1/12, H02M 7/162, H02M 7/17, C25B 1/04

(54) **ELEKTROLYSEVORRICHTUNG MIT PULSSTROMRICHTER UND TRANSFORMATOR**

(71) Anmelder: Siemens Aktiengesellschaft, 80333 München (DE)
(72) Erfinder: Lobmeyer, Stefan, 94072 Irching (DE); Schwimmbeck, Franz, 94099 Ruhstorf (DE)
(74) Vertreter: Siemens Patent Attorneys

(57) **Zusammenfassung**

Die Erfindung betrifft eine Elektrolysevorrichtung (1), aufweisend einem Pulsstromrichter (2), einen Elektrolyseur (3), einen Transformator (4) und Anschlüsse (6) für die Speisung mit elektrischer Energie, wobei der Transformtor (4) primärseitig mit den Anschlüssen (6) für die Speisung mit elektrischer Energie elektrisch verbunden ist, wobei der Pulsstromrichter (2) gleichspannungsseitig mit dem Elektrolyseur (3) elektrisch verbunden ist, wobei der Pulsstromrichter (2) wechselspannungsseitig mit einer Sekundärseite (42) des Transformators (4) elektrisch verbunden ist, wobei der Pulsstromrichter eingerichtet ist, mit einer Pulsfrequenz (f_{P}) betrieben zu werden. Zur Verringerung der Oberschwingungsströme der Elektrolysevorrichtung (1) wird vorgeschlagen, dass die Elektrolysevorrichtung (1) netzfilterfrei ausgebildet ist, wobei eine Streuinduktivität (L_{σ}) und/oder eine Kurzschlussspannung (u_{K}) des Transformators (4) derart bemessen ist, dass Oberschwingungsströme zwischen dem Transformator (4) und den Anschlüssen (6) eine vorgebbare Grenze unterschreiten. Weiter betrifft die Erfindung die Verwendung einer Streuinduktivität (L_{σ}) eines Transformators (4) einer derartigen Elektrolysevorrichtung zur Reduzierung von Oberschwingungsströmen zwischen der Elektrolysevorrichtung (1) und eines Energieversorgungsnetzes (7). Die Erfindung betrifft ferner ein Verfahren zum Betreiben einer derartigen Elektrolysevorrichtung (1), wobei der Pulsstromrichter mit einer Pulsfrequenz (f_{P}) betrieben wird, bei der die sich ausbildenden Oberschwingungsströme zwischen dem Transformator (4) und den Anschlüssen (6) die vorgegebene Grenze unterschreiten.

## Beschreibung

Die Erfindung betrifft eine Elektrolysevorrichtung, aufweisend einem Pulsstromrichter, einen Elektrolyseur, einen Transformator und Anschlüsse für die Speisung mit elektrischer Energie, wobei der Transformtor primärseitig mit den Anschlüssen für die Speisung mit elektrischer Energie elektrisch verbunden ist, wobei der Pulsstromrichter gleichspannungsseitig mit dem Elektrolyseur elektrisch verbunden ist, wobei der Pulsstromrichter wechselspannungsseitig mit einer Sekundärseite des Transformators elektrisch verbunden ist, wobei der Pulsstromrichter eingerichtet ist, mit einer Pulsfrequenz betrieben zu werden. Die Erfindung betrifft weiter die Verwendung einer Streuinduktivität eines Transformators einer derartigen Elektrolysevorrichtung zur Reduzierung von Oberschwingungsströmen zwischen der Elektrolysevorrichtung und eines Energieversorgungsnetzes. Ferner betrifft die Erfindung ein Verfahren zum Betreiben einer derartigen Elektrolysevorrichtung.

Für die Elektrolyse werden zur Erzeugung einer Gleichspannung Stromrichter eingesetzt, die aus einer Wechselspannung einer Energiequelle oder eines Energieversorgungsnetzes eine Gleichspannung erzeugen, mit der die Elektrolyse im Elektrolyseur stattfinden kann. Dabei entstehen durch den Stromrichter Oberschwingungen. Diese führen zu Strömen auf der Wechselspannungsseite des Stromrichters, die insbesondere für das Energieversorgungsnetz unerwünscht sind. Diese Ströme werden auch als Oberschwingungsströme bezeichnet. Üblicherweise werden diese mit Filterschaltungen herausgefiltert. Diese Filter dienen zur Verhinderung oder Unterdrückung von Oberschwingungen im Netzstrom und werden daher auch als Netzfilter bezeichnet. Als Netzstrom wird der Strom zwischen einem Energieversorgungsnetz und der Elektrolysevorrichtung bezeichnet. Dieser kann beispielsweise an den Anschlüssen der Elektrolysevorrichtung gemessen werden. Das Netzfilter weist in der Regel Induktivitäten und Kapazitäten auf, die in einer baulichen Einheit zusammen angeordnet sind.

Durch eine versetzte Taktung mehrerer Pulsstromrichter ist es möglich, dass sich ein Teil der Oberschwingungen kompensieren, also sich gegenseitig aufheben.

Der Erfindung liegt die Aufgabe zugrunde, die Oberschwingungsströme der Elektrolysevorrichtung zu reduzieren.

Diese Aufgabe wird durch eine Elektrolysevorrichtung, aufweisend einem Pulsstromrichter, einen Elektrolyseur, einen Transformator und Anschlüsse für die Speisung mit elektrischer Energie gelöst, wobei der Transformtor primärseitig mit den Anschlüssen für die Speisung mit elektrischer Energie elektrisch verbunden ist, wobei der Pulsstromrichter gleichspannungsseitig mit dem Elektrolyseur elektrisch verbunden ist, wobei der Pulsstromrichter wechselspannungsseitig mit einer Sekundärseite des Transformators elektrisch verbunden ist, wobei der Pulsstromrichter eingerichtet ist, mit einer Pulsfrequenz betrieben zu werden, wobei die Elektrolysevorrichtung netzfilterfrei ausgebildet ist, wobei eine Streuinduktivität und/oder eine Kurzschlussspannung des Transformators derart bemessen ist, dass Oberschwingungsströme zwischen dem Transformator und den Anschlüssen eine vorgebbare Grenze unterschreiten. Weiter wird diese Aufgabe durch die Verwendung einer Streuinduktivität eines Transformators einer derartigen Elektrolysevorrichtung zur Reduzierung von Oberschwingungsströmen zwischen der Elektrolysevorrichtung und eines Energieversorgungsnetzes gelöst. Diese Aufgabe wird ferner durch ein Verfahren zum Betreiben einer derartigen Elektrolysevorrichtung gelöst, wobei der Pulsstromrichter mit einer Pulsfrequenz betrieben wird, bei der die sich ausbildenden Oberschwingungsströme zwischen dem Transformator und den Anschlüssen die vorgegebene Grenze unterschreiten.

Weitere vorteilhafte Ausgestaltungen der Erfindung sind in den abhängigen Ansprüchen angegeben.

Der Erfindung liegt unter anderem die Erkenntnis zugrunde, dass sich das Verhalten der Pulsstromrichter eines Elektrolyseurs dadurch hinsichtlich der Oberschwingungsströme im Netzstrom verbessern lässt, dass die Streuinduktivität des Transformators derart hoch gewählt wird, dass diese die Oberschwingungsströme hinreichend reduzieren. Damit kann auf ein Netzfilter verzichtet werden. Mit anderen Worten ist die Elektrolysevorrichtung netzfilterfrei ausgeführt. Die Elektrolysevorrichtung ist dazu eingerichtet, an den Anschlüssen zur Speisung mit elektrischer Energie mit einem Energieversorgungsnetz oder einer Energiequelle verbunden zu werden. Für eine Elektrolyseleistung von etwa 5 MVA hat sich eine Speisung mit Mittelspannung durch das Energieversorgungsnetz mit einer Spannung im Bereich von 10kV bis 30kV als vorteilhaft erwiesen. Dabei ergeben sich Nennströmen von etwa 100A bis 300A zwischen Energieversorgungsnetz und Transformatorder Elektrolysevorrichtung. Für die Elektrolyse lässt sich daraus durch den Stromrichter eine Gleichspannung von etwa 800V (+/-20%) auf besonders effiziente Weise erzeugen. Zur hinreichenden Unterdrückung der Oberschwingungen durch den Transformator hat sich eine Kurzschlussspannung u_{K} im Bereich von 10% bis 25%, insbesondere im Bereich von 10% bis 15% als besonders wirkungsvoll erwiesen. Es hat sich gezeigt, dass der Mehraufwand für einen Transformator mit einer derartigen Kurzschlussspannung günstiger ist als ein Netzfilter zur Unterdrückung der Oberschwingungen.

Dabei hat es sich als vorteilhaft erwiesen, dass die Streuinduktivität des Transformators in derselben Größenordnung liegt wie eine Filterdrossel des Stromrichters, wie sie bisher zur Reduktion von Oberschwingungsströmen eingesetzt wird. Dann kann die Transformatorstreuung als Arbeitsinduktivität zur Unterdrückung der Oberschwingungsströme verwendet werden.

Alternativ hat es sich als vorteilhaft erwiesen, anstatt der Streuinduktivität die Kurzschlussspannung des Transformators derart auszulegen, dass durch diese die Ausbildung von Oberschwingungsströmen hinreichend unterdrückt wird. Anstatt eine bestimmte Streuinduktivität für den Transformator zu fordern, wird die Filterwirkung durch eine entsprechende Kurzschlussspannung des Transformators erzeugt. Diese Kurzschlussspannung ist eine grundlegende Eigenschaft des Transformators, die an vorhandene Anforderungen im Rahmen der Auslegung des Transformators angepasst werden kann.

Ein weiterer Freiheitsgrad besteht darin, die Pulsfrequenz f_{P} des Pulsstromrichters anzupassen, um die Oberschwingungen zu reduzieren. Je größer die Pulsfrequenz, desto geringer ist die erforderliche Streuinduktivität des Transformators. Darüber hinaus hat sich auch gezeigt, dass nur eine geringere Kurzschlussspannung uₖ beim Transformator benötigt wird, um einen Grenzwert bei den Oberschwingungsströmen einhalten zu können.

Bei einer vorteilhaften Ausgestaltung der Erfindung ist die Streuinduktivität und/oder eine Kurzschlussspannung des Transformators derart bemessen, dass ein Strom im Bereich der Pulsfrequenz und/oder im Bereich eines Vielfachen der Pulsfrequenz zwischen dem Transformator und den Anschlüssen die vorgebbare Grenze unterschreitet. Eine genaue Betrachtung des Pulsstromrichters hinsichtlich seines Verhaltens bei der Erzeugung von Oberschwingungsströme hat ergeben, dass diese gebündelt im Bereich der Pulsfrequenz auftreten. Der Bereich der Pulsfrequenz, in dem diese Ströme auftreten, erstreckt sich dabei über einen Bereich von dem Siebenfachen der Netzfrequenz oder, je nach Impedanzverhältnissen am Netzanschlusspunkt, von dem Dreizehnfachen der Netzfrequenz um die Pulsfrequenz herum. Mit anderen Worten erstreckt sich der Bereich der Pulsfrequenz von der Pulsfrequenz minus des Siebenfachen bzw. Dreizehnfachen der Netzfrequenz bis zu der Pulsfrequenz plus des Siebenfachen bzw. Dreizehnfachen der Netzfrequenz. Darüber hinaus erzeugt der Stromrichter auch Oberschwingungen im Bereich des Vielfachen der Pulsfrequenz. Dabei erstreckt sich der Bereich der Vielfachen der Pulsfrequenz von dem Vielfachen der Pulsfrequenz minus des Siebenfachen bzw. Dreizehnfachen der Netzfrequenz bis zu dem Vielfachen der Pulsfrequenz plus des Siebenfachen bzw. Dreizehnfachen der Netzfrequenz. Die Breite des Bereichs bleibt somit auch bei den Vielfachen der Pulsfrequenz gleich mit der Breite des Bereichs bei der einfachen Pulsfrequenz.

Es hat sich als vorteilhaft erwiesen, bei der Auslegung des Transformators hinsichtlich seiner Streuinduktivität bzw. seiner Kurzschlussspannung, den Bereich der Pulsfrequenz heranzuziehen und Ströme im Bereich der Pulsfrequenz heranzuziehen. Dabei wird aus den einzelnen Stromkomponenten in diesem Bereich ein Effektivwert gebildet, der den Strom in diesem Bereich der Pulsfrequenz oder im Bereich des entsprechenden Vielfachen der Pulsfrequenz beschreibt. Damit ergibt sich eine besonders einfache Auslegung der Streuinduktivität oder der Kurzschlussspannung. Diese Ströme lassen sich aufgrund des bekannten Verhaltens des Pulsstromrichters besonders einfach, insbesondere mittels Simulation bestimmen. Diese Bestimmung ist damit auch unabhängig von Netzparametern des Energieversorgungsnetzes oder anderen Verbrauchern in der Umgebung der Elektrolysevorrichtung. Diese sind oftmals bei der Auslegung nicht bekannt oder können nur durch aufwendige Messungen ermittelt werden. Es hat sich gezeigt, dass die Betrachtung der Ströme im Bereich der Pulsfrequenz und/oder deren Vielfachen zu einem hinreichenden Ergebnis bei der Dimensionierung der Streuinduktivität und/oder der Kurzschlussspannung führt.

Bei einer weiteren vorteilhaften Ausgestaltung der Erfindung ist zwischen den Anschlüssen für die Speisung mit elektrischer Energie und dem Pulsstromrichter ein Kondensator angeordnet. Mit der Anordnung eines oder mehrerer Kondensatoren in der Verbindung zwischen den Anschlüssen für die Speisung mit elektrischer Energie und dem Pulsstromrichter können noch vorhandene Anteile der Oberschwingungsströme weiter reduziert werden. Damit können höhere Oberschwingungsströme des Pulsstromrichters oder der Pulsstromrichter zugelassen werden, die nur eine geringere Streuinduktivität oder eine geringere Kurzschlussspannung des Transformators erfordern. Diese werden dann durch den Kondensator unterdrückt oder beseitigt. Anstelle eines Netzfilters mit Spulen und Kondensatoren können somit lediglich die Kondensatoren zum Einsatz kommen. Durch die damit verbundenen geringeren Energiespeicher in der Elektrolysevorrichtung neigt diese weniger zum Ausbilden von Schwingungen zwischen dem Energieversorgungsnetz und der Elektrolysevorrichtung bzw. innerhalb des Energieversorgungsnetzes.

Bei einer weiteren vorteilhaften Ausgestaltung der Erfindung bilden die Streuinduktivität des Transformators und der Kondensator einen Sperrkreis mit einer Resonanzfrequenz im Bereich der Pulsfrequenz oder im Bereich eines Vielfachen der Pulsfrequenz bilden. Dazu ist der Kondensator vorteilhafterweise zwischen dem Transformator und dem Pulsstromrichter angeordnet. Die Anordnung erfolgt dann beispielsweise in einer Parallelschaltung bei dem jeweils ein Kondensator mit einer der Phasen verbunden ist und die Kondensatoren an einem Sternpunkt miteinander verbunden sind. Durch den Sperrkreis wird die Ausbildung von Oberschwingungsströmen in einem engen Frequenzband unterdrückt. Daher bietet es sich gerade für die Unterdrückung von Strömen im Bereich der Pulsfrequenz oder eines Vielfachen der Pulsfrequenz an, da hier im Gegensatz zur Filterung mit einem Netzfilter nur ein enger Bereich an Frequenzen zu beseitigen ist. Dies führt zu einer besonders einfachen und aufgrund der geringen Schwingungsneigung dieser Anordnung robusten Lösung.

Bei einer weiteren vorteilhaften Ausgestaltung der Erfindung weist die Elektrolysevorrichtung mindestens zwei Pulsstromrichtern auf, wobei die Pulsstromrichter wechselspannungsseitig parallel angeordnet sind, wobei die Elektrolysevorrichtung eine Steuervorrichtung zur Steuerung der Pulsstromrichter aufweist, die eingerichtet ist, die Pulsstromrichter versetzt zu takten. Um den Aufwand zur Erzeugung einer hinreichend großen Streuinduktivität des Transformators zu reduzieren, hat es sich als vorteilhaft erwiesen, mindestens zwei Pulsstromrichter wechselspannungsseitig parallel anzuordnen.

Diese parallele Anordnung führt dazu, dass das Spektrum der Oberschwingungen sich hin zu höheren Werten, d.h. zu Vielfachen der Pulsfrequenz verschiebt. Durch die höheren Werte ergibt sich ein geringerer benötigter Wert für die Streuinduktivität oder auch der Kurzschlussspannung des Transformators. Damit kann die Elektrolysevorrichtung nicht nur redundant, sondern auch gleichzeitig kostengünstig ausgebildet sein.

Bei zwei Pulsstromrichtern, die um 180° phasenversetzt getaktet werden, löschen sich die Vielfachen die Frequenzanteile der Pulsfrequenz aus. Bei drei Pulsstromrichtern, die mit 120° phasenversetzt getaktet werden, löschen sich die Frequenzanteile der Pulsfrequenz und der doppelten Pulsfrequenz aus.

Die parallele Anordnung der Pulsstromrichter kann über beispielsweise mittels unterschiedlicher Sekundärwicklungen des Transformators erfolgen.

Im Folgenden wird die Erfindung anhand der in den Figuren dargestellten Ausführungsbeispiele naher beschrieben und erläutert. Es zeigen:
- FIG 1: ein Ausführungsbeispiel einer filterlosen Elektrolysevorrichtung,
- FIG 2 und FIG 3: jeweils ein Ausführungsbeispiel einer Elektrolysevorrichtung mit einem Kondensator,
- FIG 4 und FIG 5: jeweils ein Ausführungsbeispiel einer Elektrolysevorrichtung mit mehreren Pulsstromrichtern und
- FIG 6: ein typisches Frequenzspektrum eines Pulsstromrichters.

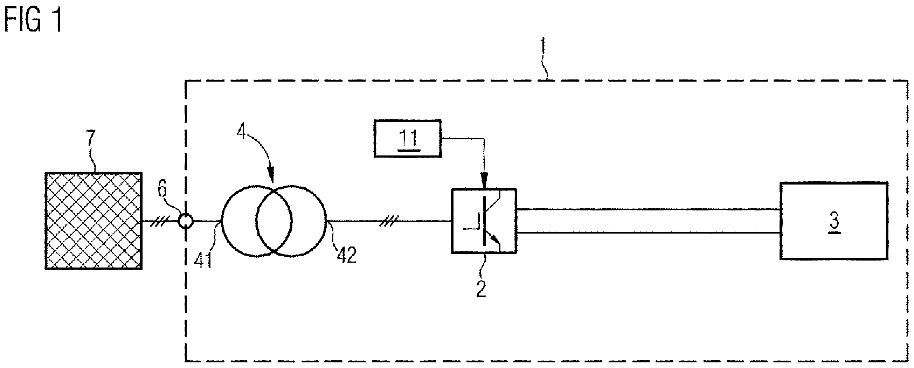

Die FIG 1 zeigt eine Elektrolysevorrichtung 1, die über ihre Anschlüsse 6 zur Speisung mit elektrischer Energie mit einem Energieversorgungsnetz 7 verbunden ist. Ein Elektrolyseur 3 wird mit einer Gleichspannung, die von einem Pulsstromrichter 2 erzeugt wird, gespeist. Der Pulsstromrichter ist dabei wechselspannungsseitig, in vorteilhafter Weise dreiphasig, über einen Transformator 4 mit den Anschlüssen 6 verbunden. Dabei befinden sich die Anschlüsse 6 auf der Primärseite 41 des Transformators 4 und der Pulsstromrichter 2 auf der Sekundärseite 42. Der Pulsstromrichter wird von einer Steuervorrichtung 11 gesteuert, die Schaltsingale an den Pulsstromrichter 2 übermittelt. Es ist zu erkennen, dass die Elektrolysevorrichtung 1 kein Netzfilter aufweist, also netzfilterfrei ausgeführt ist.

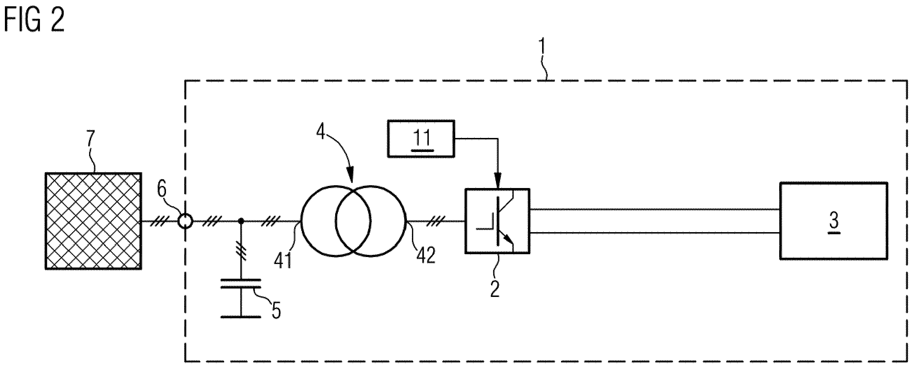

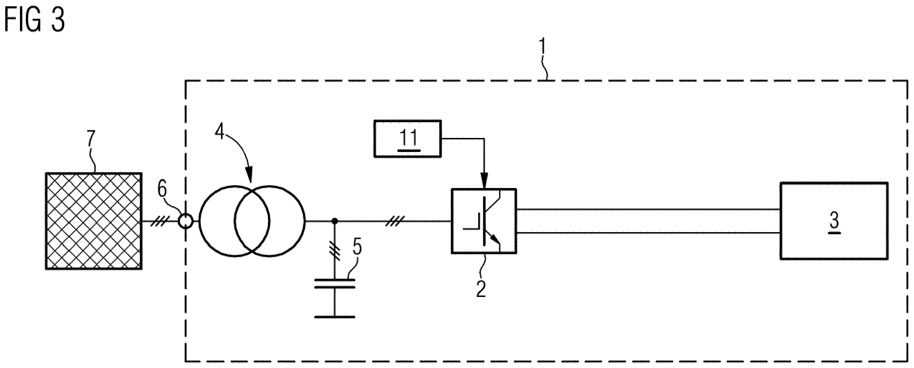

Die FIG 2 zeigt ein weiteres Ausführungsbeispiel der Elektrolysevorrichtung 1. Diese weist, wie das folgende Ausführungsbeispiel der FIG 3, einen Kondensator 5 auf, der zwischen den Anschlüssen 6 und dem Pulsstromrichter 2 angeordnet ist. In dem Ausführungsbeispiel der FIG 2 ist dieser ist der Kondensator auf der Primärseite 41 des Transformators 4 angeordnet. Das führt dazu, dass entstehende Oberschwingungsströme, reduziert durch die Streuinduktivität des Transformators 4, sich zwar ausbilden können, allerdings über den Kondensator 5 abfließen und damit vom Energieversorgungsnetz 7 ferngehalten werden. Im Ausführungsbeispiel der FIG 3 ist der Kondensator 5 auf der Sekundärseite 42 des Transformators 4 angeordnet. Neben den oben beschrieben Wirkung des Kondensators wirkt dieser auch als Sperrkreis. Vom Pulsstromrichter 2 in Richtung Anschlüsse 6 betrachtet, bilden die Streuinduktivität des Transformators 4 und der Kondensator 5 eine Parallelschaltung, die als Sperrkreis wirkt und Oberschwingungsströme blockiert, wenn die Resonanzfrequenz ω_{R} im Bereich der Pulsfrequenz oder im Bereich der Vielfachen der Pulsfrequenz liegt. Zur Vermeidung von Wiederholungen zur Beschreibung der Ausführungsbeispiele der Figuren 2 und 3 wird auf die Beschreibung zur FIG 1 sowie auf die dort eingeführten Bezugszeichen verwiesen.

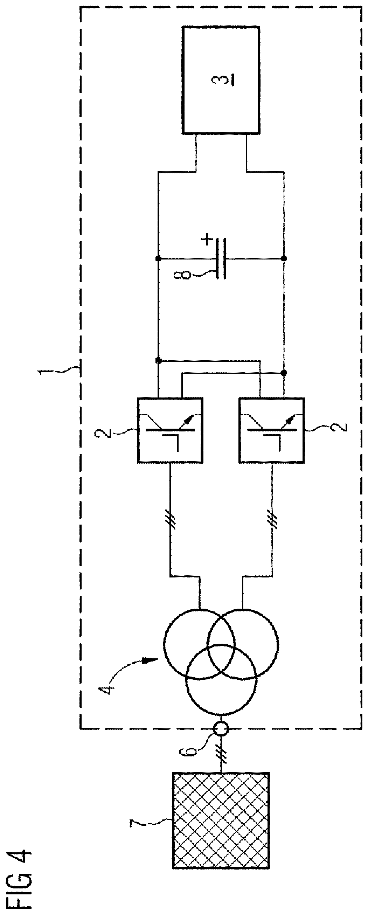

Die FIG 4 zeigt ein Ausführungsbeispiel der Elektrolysevorrichtung 1 mit zwei Pulsstromrichtern 2. Diese sind wechselspannungsseitig in einer Parallelschaltung angeordnet, da sich ein Netzstrom auf die beiden Pulsstromrichter 2 aufteilt. Gleichspannungsseitig speisen diese denselben Elektrolyseur, indem diese an dem Zwischenkreiskondensator gleichspannungsseitig ebenfalls parallel angeordnet sind. Diese gleichspannungsseitige Parallelschaltung ist allerdings nicht erforderlich. Ebenso ist es beispielsweise möglich, dass beide Pulsstromrichter einen jeweils einen oder mehrere Elektrolyseure 3 über eine entsprechende Gleichspannung mit elektrischer Energie versorgen. Werden die beiden Pulsstromrichter versetzt getaktet, womit eine Phasenversetzung um 180° gemeint ist, so löschen sich die Frequenzanteile in den Strömen der Pulsfrequenz aus und die Streuinduktivität bzw. die Kurzschlussspannung des Transformators 4 ist auf die doppelte Pulsfrequenz f_{P} auszulegen. Dies macht die Streuinduktivität bzw. die Kurzschlussspannung des Transformators 4 geringer, so dass der Transformator 4 und die Elektrolysevorrichtung 1 kostengünstiger herstellbar sind. Zur Vermeidung von Wiederholungen wird auf die Beschreibung zu den Figuren 1 bis 3 sowie auf die dort eingeführten Bezugszeichen verwiesen.

Die beschriebenen Ausführungsbeispiele sind wechselspannungsseitig vorzugsweise dreiphasig ausgebildet. Dies erlaubt eine kontinuierliche Versorgung der Elektrolysevorrichtung 1 mit Energie aus einem gewöhnlichen Energieversorgungsnetz 7, das heutzutage in aller Regel dreiphasig ausgebildet ist.

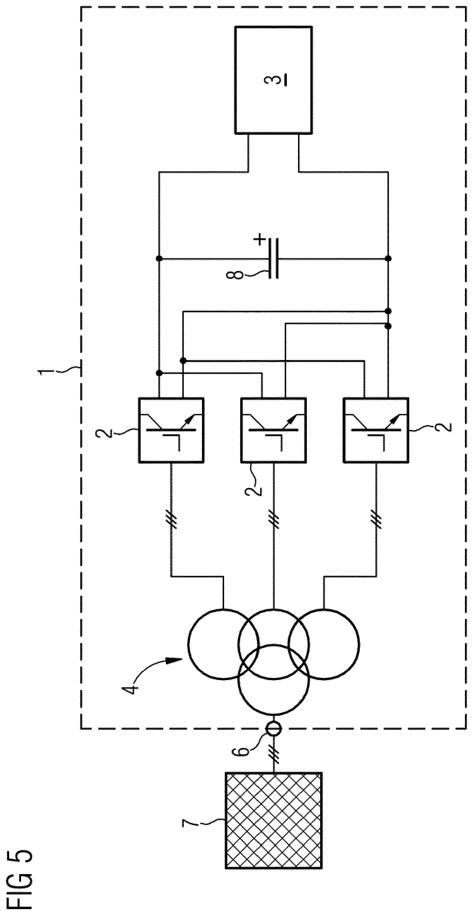

Bei dem Ausführungsbeispiel der FIG 5 sind drei Pulsstromrichter 2 wechselspannungsseitig parallel angeordnet. Zur Vermeidung von Wiederholungen wird auf die Beschreibung zu den Figuren 1 bis 4 sowie auf die dort eingeführten Bezugszeichen verwiesen. Durch die drei Pulsstromrichter, die versetzt getaktet werden, also mit einer Phasenversetzung von 120° versetzt getaktet werden, löschen sich die Oberschwingungsströme der Pulsfrequenz und der doppelten Pulsfrequenz aus. Die Streuinduktivität bzw. die Kurzschlussspannung des Transformators 4 sind dann auf die dreifache Pulsfrequenz f_{P} auszulegen. Dies macht die Streuinduktivität bzw. die Kurzschlussspannung des Transformators 4 nochmals geringer, so dass der Transformator 4 und die Elektrolysevorrichtung 1 noch kostengünstiger herstellbar sind.

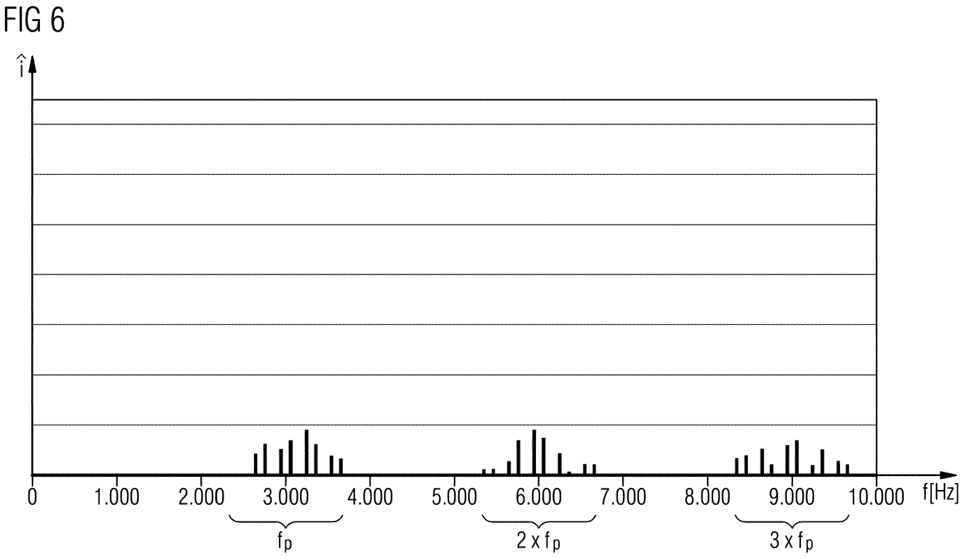

Die FIG 6 zeigt ein typisches Frequenzspektrum eines Pulsstromrichters 2, der mit einer Pulsfrequenz von 3000 Hz getaktet wird. Im Bereich der Taktfrequenz und im Bereich der Vielfachen der Taktfrequenz entstehen Ströme. Die Bereiche sind dabei mit einer geschweiften Klammer dargestellt. Aus den Stromanteilen der geschweiften Klammer lässt sich mittels Effektivwertberechnung ein Stromwert für den betreffenden Bereich der Pulsfrequenz bzw. für den Bereich des entsprechenden Vielfachen der Pulsfrequenz ermitteln und mit einem Grenzwert vergleichen. Die Streuinduktivität wird dann mindestens so hoch gewählt, dass der entsprechende sich ausbildende Oberschwingungsstrom diesen Grenzwert unterschreitet.

Zusammenfassend betrifft die Erfindung eine Elektrolysevorrichtung 1, aufweisend einem Pulsstromrichter 2, einen Elektrolyseur 3, einen Transformator 4 und Anschlüsse 6 für die Speisung mit elektrischer Energie, wobei der Transformtor 4 primärseitig mit den Anschlüssen 6 für die Speisung mit elektrischer Energie elektrisch verbunden ist, wobei der Pulsstromrichter 2 gleichspannungsseitig mit dem Elektrolyseur 3 elektrisch verbunden ist, wobei der Pulsstromrichter 2 wechselspannungsseitig mit einer Sekundärseite 42 des Transformators 4 elektrisch verbunden ist, wobei der Pulsstromrichter eingerichtet ist, mit einer Pulsfrequenz f_{P} betrieben zu werden. Zur Verringerung der Oberschwingungsströme der Elektrolysevorrichtung 1 wird vorgeschlagen, dass die Elektrolysevorrichtung 1 netzfilterfrei ausgebildet ist, wobei eine Streuinduktivität L_{σ} und/oder eine Kurzschlussspannung u_{K} des Transformators 4 derart bemessen ist, dass Oberschwingungsströme zwischen dem Transformator 4 und den Anschlüssen 6 eine vorgebbare Grenze unterschreiten. Weiter betrifft die Erfindung die Verwendung einer Streuinduktivität L_{σ} eines Transformators 4 einer derartigen Elektrolysevorrichtung zur Reduzierung von Oberschwingungsströmen zwischen der Elektrolysevorrichtung 1 und eines Energieversorgungsnetzes 7. Die Erfindung betrifft ferner ein Verfahren zum Betreiben einer derartigen Elektrolysevorrichtung 1, wobei der Pulsstromrichter mit einer Pulsfrequenz f_{P} betrieben wird, bei der die sich ausbildenden Oberschwingungsströme zwischen dem Transformator 4 und den Anschlüssen 6 die vorgegebene Grenze unterschreiten.

## Patentansprüche

1. Elektrolysevorrichtung (1), aufweisend
- einem Pulsstromrichter (2),
- einen Elektrolyseur (3),
- einen Transformator (4) und
- Anschlüsse (6) für die Speisung mit elektrischer Energie, wobei der Transformtor (4) primärseitig mit den Anschlüssen (6) für die Speisung mit elektrischer Energie elektrisch verbunden ist, wobei der Pulsstromrichter (2) gleichspannungsseitig mit dem Elektrolyseur (3) elektrisch verbunden ist, wobei der Pulsstromrichter (2) wechselspannungsseitig mit einer Sekundärseite (42) des Transformators (4) elektrisch verbunden ist, wobei der Pulsstromrichter (2) eingerichtet ist, mit einer Pulsfrequenz (f_{P}) betrieben zu werden,
**dadurch gekennzeichnet, dass** die Elektrolysevorrichtung (1) netzfilterfrei ausgebildet ist, wobei eine Streuinduktivität (L_{σ}) und/oder eine Kurzschlussspannung (u_{K}) des Transformators (4) derart bemessen ist, dass Oberschwingungsströme zwischen dem Transformator (4) und den Anschlüssen (6) eine vorgebbare Grenze unterschreiten.

2. Elektrolysevorrichtung (1) nach Anspruch 1, wobei die Streuinduktivität (L_{σ}) und/oder eine Kurzschlussspannung (u_{K}) des Transformators (4) derart bemessen ist, dass ein Strom im Bereich der Pulsfrequenz (f_{P}) und/oder im Bereich eines Vielfachen der Pulsfrequenz (f_{P}) zwischen dem Transformator (4) und den Anschlüssen (6) die vorgebbare Grenze unterschreitet.

3. Elektrolysevorrichtung (1) nach einem der Ansprüche 1 oder 2, wobei zwischen den Anschlüssen (6) für die Speisung mit elektrischer Energie und dem Pulsstromrichter (2) ein Kondensator (5) angeordnet ist.

4. Elektrolysevorrichtung (1) nach Anspruch 3, wobei die Streuinduktivität (L_{σ}) des Transformators (4) und der Kondensator (5) einen Sperrkreis mit einer Resonanzfrequenz (ω_{R}) im Bereich der Pulsfrequenz (f_{P}) oder im Bereich eines Vielfachen der Pulsfrequenz (f_{P}) bilden.

5. Elektrolysevorrichtung (1) nach einem der Ansprüche 1 bis 4, wobei die Elektrolysevorrichtung (1) mindestens zwei Pulsstromrichtern (2) aufweist, wobei die Pulsstromrichter (2) wechselspannungsseitig parallel angeordnet sind, wobei die Elektrolysevorrichtung eine Steuervorrichtung (11) zur Steuerung der Pulsstromrichter (2) aufweist, die eingerichtet ist, die Pulsstromrichter (2) versetzt zu takten.

6. Verwendung einer Streuinduktivität (L_{σ}) eines Transformators (4) einer Elektrolysevorrichtung (1) nach einem der Ansprüche 1 bis 4 zur Reduzierung von Oberschwingungsströmen zwischen der Elektrolysevorrichtung (1) und eines Energieversorgungsnetzes (7).

7. Verfahren zum Betreiben einer Elektrolysevorrichtung (1) nach einem der Ansprüche 1 bis 6, wobei der Pulsstromrichter (2) mit einer Pulsfrequenz (f_{P}) betrieben wird, bei der die sich ausbildenden Oberschwingungsströme zwischen dem Transformator (4) und den Anschlüssen (6) die vorgegebene Grenze unterschreiten.

8. Verfahren nach Anspruch 7, wobei der Pulsstromrichter mit einer Pulsfrequenz (f_{P}) betrieben wird, bei der die sich ausbildenden Ströme im Bereich der Pulsfrequenz (f_{P}) und/oder im Bereich eines Vielfachen der Pulsfrequenz (f_{P}) zwischen dem Transformator (4) und den Anschlüssen (6) die vorgebbare Grenze unterschreitet.

9. Verfahren nach einem der Ansprüche 7 oder 8, wobei die Elektrolysevorrichtung (1) mindestens zwei Pulsstromrichtern (2) aufweist, wobei die Pulsstromrichter (2) wechselspannungsseitig parallel angeordnet sind, wobei die Pulsstromrichter (2) versetzt getaktet werden.
